# EUROPÄISCHE PATENTANMELDUNG

(11) **EP 4 000 872 A1**
(43) Veröffentlichungstag der Anmeldung: **25.05.2022**
(21) Anmeldenummer: 21209435.3
(22) Anmeldetag: 19.11.2021
(51) Int. Cl.: B29C 65/10, B29C 35/04, B29C 65/00, F24H 3/02, F24H 3/06

(54) **HEIZSYSTEM ZUM ERWÄRMEN EINES FLUIDSTROMS**

(30) Priorität: 21.11.2020 DE 102020130828
(71) Anmelder: Wagner, Ewald, 32429 Minden (DE)
(72) Erfinder: Wagner, Ewald, 32429 Minden (DE)
(74) Vertreter: Wenzel Nemetzade Warthmüller Patentanwälte Part mbB

(57) **Zusammenfassung**

Heizsystem (10) zum Erwärmen eines Fluidstroms, insbesondere für eine Heißgasschweißanlage, mit einem Materialbett (12) aus wärmeleitfähigem und/oder wärmespeicherndem Schüttgut (14), mit wenigstens einem innerhalb des Materialbetts (12) angeordneten Kanal (16) für die Durchleitung eines zu erwärmenden Fluidstroms und mit wenigstens einer in und/oder an dem Materialbett (12) angeordneten Heizquelle (18) zur Erzeugung von Wärme für die Beheizung des wenigstens einen Kanals (16), wobei in dem Kanal (16) wenigstens ein Störkörper (24) zur Erzeugung und/oder Verstärkung einer turbulenten Strömung vorgesehen ist.

## Beschreibung

Die vorliegende Erfindung betrifft Heizsystem zum Erwärmen eines Fluidstroms, insbesondere für eine Heißgasschweißanlage. Ebenso betrifft die vorliegende Erfindung einen Heizkörper für ein solches Heizsystem sowie eine Heißgasschweißanlage, insbesondere zum Heißgasschweißen von Kunststoffwerkstücken. Schließlich betrifft die Erfindung auch ein Verfahren zum Erwärmen eines Fluidstroms, insbesondere zum Heißgasschweißen von Kunststoffwerkstücken.

Für das Heißgasschweißen von Kunststoffteilen kommen Heizsysteme für die Erwärmung eines Gasstroms zum Einsatz. Ein solcher Gasstrom wird nach der Erwärmung auf die zu verschweißenden Werkstückabschnitte geleitet und anschließend können die erwärmten Werkstückabschnitte zusammengeführt und dadurch miteinander verschweißt werden. Dabei ist es bekannt, für die Erwärmung des Gasstroms wärmeleitende Platten zu verwenden, in die sogenannte Gasbahnen mechanisch eingebracht werden, beispielsweise durch Fräsbearbeitung.

Zur Vergrößerung der Wärmeübertragungsflächen können die Gasbahnen in einer wärmeleitenden Platte mäander- oder schlangenförmigen angeordnet sein. Durch mäander- oder schlangenförmige Anordnungen von Gasbahnen wird jedoch die Anzahl der Gasbahnen in einer Platte stark begrenzt. Sofern eine verhältnismäßig hohe Anzahl von Gasbahnen erforderlich ist, beispielsweise bei komplexen Geometrien von zu schweißenden Werkstücken, müssen zusätzliche Platten vorgesehen werden. Dadurch erhöht sich der apparative Aufwand, was zu hohen Anlagenkosten führen kann.

Vor dem oben dargelegten Hintergrund bestand die Aufgabe der vorliegenden Erfindung darin, ein Heizsystem anzugeben, bei dem mit nur geringem konstruktiven Aufwand beziehungsweise mit nur geringem Platzbedarf eine Wärmeübertragung auf ein zu erwärmendes Fluid realisiert werden kann. Ebenso bestand die Aufgabe darin, einen Heizkörper für ein solches Heizsystem sowie eine mit einem solchen Heizsystem ausgestattete Heißgasschweißanlage anzugeben. Schließlich bestand die Aufgabe auch darin, ein Verfahren zum Erwärmen eines Fluidstroms anzugeben.

In Bezug auf das Heizsystem ist diese Aufgabe durch den Gegenstand des Anspruchs 1 beziehungsweise durch den Gegenstand des Anspruchs 5 und/oder 12 gelöst worden. Ein erfindungsgemäßer Heizkörper ist Gegenstand von Anspruch 13 und eine erfindungsgemäße Heißgasschweißanlage ist in Anspruch 14 angegeben. Schließlich ist in Bezug auf das Verfahren die vorliegende Aufgabe durch den Gegenstand des Anspruchs 15 gelöst worden.

Ein erfindungsgemäßes Heizsystem zum Erwärmen eines Fluidstroms ist insbesondere für den Einsatz in einer Heißgasschweißanlage geeignet beziehungsweise für den Einsatz in einer Heißgasschweißanlage ausgebildet und/oder eingerichtet. Bei einer solchen Heißgasschweißanlage kann es sich insbesondere um eine Heißgasschweißanlage für das Schweißen von Kunststoffwerkstücken handeln.

Ein erfindungsgemäßes Heizsystem ist ausgestattet mit einem Materialbett aus wärmeleitfähigem und/oder wärmespeicherndem Schüttgut, mit wenigstens einem innerhalb des Materialbetts angeordneten Kanal für die Durchleitung eines zu erwärmenden Fluidstroms und mit wenigstens einer in und/oder an dem Materialbett angeordneten Heizquelle zur Erzeugung von Wärme für die Beheizung des wenigstens einen Kanals.

Erfindungsgemäß ist nun vorgesehen, dass in dem Kanal wenigstens ein Störkörper zur Erzeugung und/oder Verstärkung einer turbulenten Strömung vorgesehen ist.

Bei einem solchen Störkörper handelt es sich insbesondere um einen in dem jeweiligen Kanal angeordneten Fremdkörper, also einem Fremdkörper, der unabhängig von dem Kanal ausgebildet und in diesen eingebracht oder eingeführt ist.

Durch einen erfindungsgemäß vorgesehenen Störkörper kann der zur Verfügung stehende Raum für die Wärmeübertragung auf einen zu erwärmenden Fluidstrom effektiver genutzt werden. So wird durch einen solchen Störkörper die laminare Strömung im inneren des Kanals unterbrochen. Es entsteht eine turbulente Strömung beim Umströmen des Störkörpers oder eine turbulente Strömung wird hierdurch verstärkt. Dies führt zu einem verbesserten beziehungsweise effizienteren Energieaustausch, also von dem Materialbett auf die Fluidströmung.

Auf diese Weise kann die erforderliche Leitungslänge des jeweiligen Kanals reduziert werden. In dem Materialbett können so auf engem Raum verhältnismäßig viele Kanäle vorgesehen werden, wodurch der apparative Aufwand reduziert werden kann. Die Gesamtkosten des Heizsystems lassen sich hierdurch reduzieren.

Gemäß einer bevorzugten Ausgestaltung der vorliegenden Erfindung kann der wenigstens eine Kanal in einem in dem Materialbett eingebetteten Rohr und/oder Schlauch ausgebildet sein. Ein Rohr und/oder Schlauch kann mit nur geringem Aufwand und einem hohen Maß Flexibilität in ein Materialbett aus Schüttgut eingebracht beziehungsweise eingebettet werden. Je nach Anforderungen lassen sich flexibel unterschiedliche geometrische Anordnungen eines Rohrs oder Schlauchs in einem Materialbett realisieren.

Ebenso können mehrere Kanäle des Heizsystems in mehreren Rohren und/oder Schläuchen ausgebildet sein. Eine Mehrzahl von Rohren und/oder Schläuchen kann dabei in geeigneter Weise in dem Materialbett eingebettet sein. Dabei lässt sich die Anordnung der Rohre und/oder Schläuche relativ zueinander flexibel im Hinblick auf die jeweiligen Anforderungen wählen.

Durch eine Mehrzahl von Rohren und/oder Schläuchen können fluidtechnisch voneinander unabhängiger Kanäle vorgesehen werden. Hierdurch können unterschiedliche Bereiche von zu schweißenden Werkstücken gleichmäßig mit einem erwärmten Fluid, beispielsweise Inertgas, angeströmt werden. Dies gestattet in bevorzugter Weise das Verschweißen von Werkstücken mit komplexen Geometrien.

In weiter bevorzugter Weise kann der wenigstens eine Kanal in einem in dem Materialbett eingebetteten Wellrohrschlauch ausgebildet sein. Besonders bevorzugt können mehrere Wellrohrschläuche in dem Materialbett eingelassen sein. Wellrohrschläuche weisen eine verhältnismäßig große Außenfläche auf, die bei Anordnung in einem Materialbett in besonders geeigneter Weise Wärme aus dem Materialbett aufnimmt. Aufgrund der großen Kontaktfläche kann eine effiziente Wärmeübertragung auf ein im Wellrohrschlauch strömendes Fluid erfolgen. Ferner können Wellrohrschläuche leicht verformt und damit in vorteilhafter Weise innerhalb des Materialbetts beziehungsweise relativ zueinander im Materialbett positioniert werden.

Gemäß einer weiter bevorzugten Ausgestaltung kann das Materialbett durch Schüttgut aus wärmeleitfähigem und/oder wärmespeicherndem und/oder verdichtetem Sand, Metallpulver und/oder Granulat gebildet sein. Insbesondere kann ein solcher Sand wärmespeichernde Eigenschaften aufweisen und ein Metallpulver kann wärmleitende Eigenschaften aufweisen. Ein Granulat kann je nach Material des Granulats vorwiegend wärmespeichernde Eigenschaften und/oder vorwiegend wärmleitende Eigenschaften aufweisen. So kann ein Granulat aus Metall oder Kunststoff oder Keramik beziehungsweise Steinmaterial bestehen. Durch die Verdichtung des Sands, Metallpulvers oder Granulats kann die Wärmespeicherung und/oder Wärmeleitung innerhalb des Materialbetts verbessert werden. Ebenso gestattet eine solche Verdichtung, dass eingebettete Komponenten, wie zum Beispiele Rohre oder Schläuche, geeignet fixiert werden.

Es kann weiter von Vorteil sein, wenn das Materialbett durch ein Schüttgutgemisch gebildet ist, insbesondere durch ein verdichtetes Schüttgutgemisch und/oder ein Schüttgutgemisch aus einem wärmeleitfähigem Metallmaterial und wärmespeicherndem Sand und/oder Gesteinsmaterial.

Durch ein Schüttgutgemisch können unterschiedliche Materialeigenschaften in vorteilhafter Weise kombiniert werden. Insbesondere kann ein wärmeleitfähiges Metallmaterial gute Wärmeübertragungseigenschaften sicherstellen, nämlich von einer Wärmequelle in das Schüttgutgemisch hinein und aus dem Schüttgutgemisch heraus auf das zu erwärmende Fluid. Demgegenüber kann ein Sand und/oder Gesteinsmaterial gute wärmespeichernde Eigenschaften aufweisen, sodass Wärmeenergie über einen längeren Zeitraum in dem Materialbett erhalten bleibt. Es lassen sich hierdurch längere Zykluszeiten für das Aufheizen des Materialbetts realisieren, wodurch die Lebensdauer der Heizquelle, insbesondere bei Ausbildung mit elektrischen Komponenten, verlängert werden kann.

Weiter bevorzugt kann die Heizquelle als elektrische Heizpatrone und/oder Heizspirale ausgebildet sein. Eine solche Heizquelle kann kostengünstig bereitgestellt werden und gewährleistet eine flexible Beheizung des Materialbetts, insbesondere mit frei wählbaren Heiztemperaturen und/oder Heizzyklen.

Noch weiter bevorzugt kann die Heizquelle zumindest abschnittsweise oder vollständig in das Materialbett eingelassen sein. Hierdurch kann eine gute Wärmeübertragung auf von der Heizquelle auf das Materialbett gewährleistet werden. Zudem können durch ein vollständiges Einlassen der Heizquelle in das Materialbett Wärmeverluste vermieden werden, da die Heizquelle vollständig durch das Schüttgut umgeben werden kann.

Gemäß einer weiter bevorzugten Ausgestaltung kann das Materialbett im Allgemeinen eine Mehrzahl von Kanälen aufweisen. Unterschiedliche Bereiche von zu schweißenden Werkstücken können über unterschiedliche Kanäle gleichmäßig mit einem erwärmten Fluid, beispielsweise Inertgas, beströmt werden. Dies gestattet das Verschweißen von Werkstücken mit komplexen Geometrien.

Ferner kann das Materialbett zur Wärmeübertragung zwischen zwei Fluidströmen ausgebildet sein, insbesondere zur Wärmeübertragung zwischen zwei Fluidströmen in voneinander fluidtechnisch unabhängigen Kanälen. Dementsprechend kann das Heizsystem als Wärmetauscher ausgebildet sein, wobei wiederum durch Anordnung des zumindest einen Störkörpers die Wärmeübertragungseigenschaften verbessert werden.

Ein weiterer unabhängiger Aspekt der vorliegenden Erfindung betrifft ein Heizsystem zum Erwärmen eines Fluidstroms für eine Heißgasschweißanlage, mit einem Heizkörper aus wärmeleitfähigem und/oder wärmespeicherndem Material, mit wenigstens einem innerhalb des Heizkörpers vorgesehenen Kanal für die Durchleitung eines zu erwärmenden Fluidstroms und mit wenigstens einer Heizquelle zur Erzeugung von Wärme für die Beheizung des wenigstens einen Kanals durch Erwärmung des Heizkörpers, wobei in dem Kanal wenigstens ein Störkörper zur Erzeugung und/oder Verstärkung einer turbulenten Strömung vorgesehen ist.

Ein erfindungsgemäßer Heizkörper kann insbesondere einstückig beziehungsweise als integrales Bauteil ausgebildet sein und damit hohen Stabilitätsanforderungen genügen. Die Anordnung des wenigstens einen Störkörpers kann wiederum die Wärmeübertragungseigenschaften verbessern, wie voranstehend bereits beschrieben.

In bevorzugter Weise kann der Heizkörper als Heizplatte ausgebildet sein, bevorzugt als Heizplatte aus einem Metallwerkstoff. Eine solche Heizplatte kann beispielsweise im Wege des Fräsens oder im Allgemeinen durch spanende Bearbeitungsverfahren erzeugt werden. Hierdurch lassen sich flexibel unterschiedlichste Kanalgeometrien beziehungsweise Kanalverläufe in eine solche Heizplatte einbringen. Je nach Ausgestaltung der Heizplatte ergibt sich somit eine Eignung für das Heißgasschweißen von Werkstücken unterschiedlichster geometrischer Ausgestaltungen.

Gemäß einer noch weiter bevorzugten Ausgestaltung kann der Heizkörper und/oder die Heizplatte als Wärmeübertrager und/oder zur Temperaturänderung und/oder Temperaturregelung ausgebildet sein, insbesondere zur Wärmeübertragung auf eine Gasströmung und/oder zur Temperaturänderung und/oder Temperaturregelung einer Gasströmung. Je nach Betriebszustand des Heizsystems beziehungsweise einer mit einem solchen Heizsystem ausgestatteten Heißgasschweißanlage kann auf diese Weise eine flexible und präzise Anpassung der Gastemperatur in dem zumindest einen Kanal vorgenommen werden. Es lässt sich damit eine hohe Wiederholgenauigkeit für Heißgasschweißprozesse sicherstellen.

Es kann weiter von Vorteil sein, wenn in dem wenigstens einen Kanal eine Mehrzahl von Störkörpern angeordnet ist. Insbesondere kann der wenigstens eine Kanal mit Störkörpern aufgefüllt oder zumindest abschnittsweise befüllt sein. Durch eine Mehrzahl von Störkörpern kann die Unterbrechung von laminaren Strömungen über längere Streckenabschnitte realisiert und damit eine weiter verbesserte Wärmeübertragung sichergestellt werden.

Es kann weiterhin vorgesehen sein, dass eine Mehrzahl von Störkörpern in dem wenigstens einen Kanal unbeweglich und/oder zumindest temporär fixiert ist. Die Fixierung kann beispielsweise durch Auffüllung des jeweiligen Kanals mit Störkörpern und Abdeckung der Kanalenden mit durchlässigen Abdeckungen realisiert werden. Auch ein anderweitiges Fixieren, wie zum Beispiel mittels Klebstoff, kann mit geringem Aufwand vorgenommen werden.

Gemäß einer weiter bevorzugten Ausgestaltung kann eine Fixierung von Störkörpern in dem wenigstens einen Kanal frei von einer stoffschlüssigen Verbindung des Störkörpers mit dem Kanal sein.

Durch eine Fixierung der Störkörper kann ein ungewolltes herausfallen aus dem jeweiligen Kanal und damit die Beeinträchtigung der Wärmeübertragungseigenschaften vermieden werden.

In besonders bevorzugter Weise kann der wenigstens eine Störkörper als Kugel-, Würfel- oder Pyramidenkörper ausgebildet oder eine ungleichmäßige Außenform aufweisen. Dies gilt in weiter vorteilhafter Weise für mehr als einen Störkörper oder für alle Störkörper in dem jeweiligen Kanal und/oder für einen Störkörper oder für alle Störkörper in dem gesamten Heizsystem. Störkörper mit derartigen Geometrien lassen sich mit nur geringem Aufwand herstellen beziehungsweise ermöglichen mit hoher Sicherheit die Unterbrechung einer laminaren Strömung.

In noch weiter bevorzugter Weise kann der wenigstens eine Störkörper mindestens 10% der Querschnittsfläche des Kanals einnehmen, bevorzugt mehr als 20%, weiter bevorzugt mehr als 30%, noch weiter bevorzugt mehr als 40%, noch weiter bevorzugt mehr als 50%, noch weiter bevorzugt mehr als 60%, noch weiter bevorzugt mehr als 70%, noch weiter bevorzugt mehr als 80%. Dies gilt besonders bevorzugt für mehr als einen Störköper oder alle Störkörper des jeweiligen Kanals. Auf diese Weise lassen sich laminare Strömungen an dem jeweiligen Störkörper vorbei auf ein geringes Maß reduzieren oder vollständig vermieden werden.

Noch weiter bevorzugt kann der Störkörper einen Durchmesser oder eine Diagonale von mehr als 5 mm, bevorzugt von mehr als 10 mm, bevorzugt von mehr als 20 mm, bevorzugt von mehr als 30 mm, bevorzugt von mehr als 50 mm, bevorzugt von mehr als 75 mm, bevorzugt von mehr als 100 mm, bevorzugt von mehr als 150 mm, bevorzugt von mehr als 200 mm, aufweisen. Dies gilt besonders bevorzugt für mehr als einen Störköper oder alle Störkörper in dem jeweiligen Kanal. Ein derart bemessener Störkörper lässt sich einfach handhaben und daher mit nur geringem Aufwand in den jeweiligen Kanal einbringen und dort positionieren beziehungsweise fixieren. Gleichzeitig gestatten derartige Dimensionierungen mit hoher Sicherheit beziehungsweise in geeignetem Umfang die Unterbrechung laminarer Strömungen.

Gemäß einer noch weiter bevorzugten Ausgestaltung kann der Störkörper einen Durchmesser oder eine Diagonale von weniger als 300 mm, bevorzugt weniger als 200 mm, bevorzugt weniger als 100 mm, bevorzugt weniger als 75 mm oder bevorzugt weniger als 50 mm, aufweisen. Dies gilt besonders bevorzugt für mehr als einen Störköper oder alle Störkörper in dem jeweiligen Kanal. Ein derart bemessener Störkörper lässt sich wiederum einfach handhaben und kann in verhältnismäßig kleine Kanäle eingebracht werden. Ebenso gestatten derartige Dimensionierungen mit hoher Sicherheit beziehungsweise in geeignetem Umfang die Unterbrechung laminarer Strömungen.

Noch weiter bevorzugt kann in dem wenigstens einen Kanal eine Mehrzahl von Störkörpern identischer Größe oder mit identischen Abmessungen angeordnet sein. Zumindest kann über einen Streckenabschnitt des Kanals eine Mehrzahl von Störkörpern identischer Größe oder mit identischen Abmessungen angeordnet sein. Durch Störkörper identischer Größe oder identischer Abmessungen kann entlang des gesamten Kanals beziehungsweise des jeweiligen Streckenabschnitts ein gleichbleibender Störeinfluss auf die Fluidströmung erzeugt werden.

Ebenso können in dem wenigstens einen Kanal Störkörper mit unterschiedlichen Größen oder mit unterschiedlichen Abmessungen angeordnet sein. Entlang unterschiedlicher Streckenabschnitte des Kanals können die jeweiligen Störkörper mithin unterschiedlich starke Störeinflüsse und damit unterschiedliche Wärmeübertragungseigenschaften erzeugen.

Beispielsweise kann gegen Ende des Kanals der bereits erwärmte Fluidstrom eine noch weiter verstärkte turbulente Strömung erfordern, um am Kanalaustritt auf die gewünschte Zieltemperatur gebracht zu werden. Auch kann es möglich sein, dass bereits zu Beginn des Kanals eine stark ausgeprägte turbulente Strömung erforderlich ist und bis zum Kanalende nur noch ein geringer Temperaturanstieg erfolgen muss. Der Temperaturgradient im weiteren Kanalverlauf kann hierdurch gering gehalten werden.

In weiter bevorzugter Ausgestaltung kann der wenigstens eine Kanal eine Mehrzahl von Streckenabschnitten aufweisen und die Größe und/oder die Abmessungen der Störkörper können in Abhängigkeit des jeweiligen Streckenabschnitts ausgewählt sein. Ebenso können die Größen und/oder Abmessungen der Störkörper in einem Streckenabschnitt des Kanals von den Größen und/oder Abmessungen der Störkörper in einem anderen Streckenabschnitt des Kanals abweichen. Die Wärmeübertragungseigenschaften des jeweiligen Kanalabschnitts lassen sich hierdurch gezielt einstellten beziehungsweise beeinflussen.

In dem Materialbett oder dem Heizkörper kann allgemein eine Mehrzahl von Kanälen vorgesehen sein. Es kann sich in bevorzugter Weise bei der Mehrzahl von Kanälen um voneinander unabhängige und/oder fluidtechnisch entkoppelter Kanäle handeln. Diese können also zur Erwärmung unterschiedlicher Fluidströme für unterschiedliche Fügeabschnitte von Werkstücken genutzt werden.

Die Größen oder Abmessungen der Störkörper in unterschiedlichen Kanälen können dabei identisch oder verschieden sein. Je nach Kanal können also die Störeinflüsse über unterschiedlich bemessene Störkörper voneinander abweichen und damit auch die Wärmeübertragungseigenschaften. Ebenso können in verschiedenen Kanälen die Störeinflüsse durch identische bemessene Störkörper gleich sein und damit auch die Wärmeübertragungseigenschaften.

Weiter bevorzugt kann in dem Materialbett oder dem Heizkörper eine Mehrzahl von Kanälen vorgesehen sein, die eine identische Länge und/oder eine identische Querschnittsgröße und/oder einen identischen Verlauf aufweisen. Die Wärmeübertragungseigenschaften der Kanäle können somit gleich sein.

Der wenigstens eine Kanal kann linear oder mäanderförmig beziehungsweise schlangenförmig verlaufen. Ebenso können mehrere Kanäle linear oder mäanderförmig beziehungsweise schlangenförmig und/oder parallel und/oder nebeneinander verlaufen.

Linear und parallel zueinander verlaufende Kanäle können dicht angeordnet sein, sodass auf engem Raum viele Kanäle vorgesehen werden können. Mäanderförmig beziehungsweise schlangenförmige verlaufende Kanäle benötigen zwar mehr Platz innerhalb des Materialbetts oder innerhalb des Heizkörpers, ermöglichen jedoch eine längere Kanalstrecke und damit eine verbesserte Wärmeübertragung.

Der wenigstens eine Kanal und/oder die mehreren Kanäle können in bevorzugter Weise durch gasundurchlässige Kanalwände begrenzt sein. Ein Hindurchtreten oder Diffundieren der Fluidströmung durch die Kanalwände, beispielsweise in das Materialbett hinein, kann dadurch vermieden werden.

Insbesondere kann der wenigstens eine Kanal und/oder die mehreren Kanäle im Betrieb entlang der jeweiligen Kanallängserstreckung durchströmbar sein, bevorzugt ausschließlich entlang einer Kanallängserstreckung. Bei makroskopischer Betrachtung können Strömungen quer zur Kanallängserstreckung dadurch vermieden werden oder erfolgen allenfalls im Rahmen turbulenter Strömung. Das Volumen der Fluidströmung durch den jeweiligen Kanal kann dadurch präzise eingestellt werden.

Weiterhin können in dem Materialbett oder in dem Heizkörper mehrere Kanäle vorgesehen sind, die verschiedene Längen und/oder verschiedene Querschnittsgrößen und/oder verschiedene Verlaufsformen aufweisen. Jeder Kanal kann auf diese Weise im Hinblick die jeweiligen Anforderungen ausgestaltet werden. Je nach zu beströmendem Werkstückabschnitt kann ein Kanal beispielsweise für eine stärkere oder weniger starke Erwärmung der Fluidströmung ausgebildet sein. Ebenso können unterschiedliche Ausgestaltungen im Hinblick auf unterschiedliche Strömungsvolumina vorgenommen werden.

Ein weiterer unabhängiger Aspekt der vorliegenden Erfindung betrifft allgemein auch ein Heizsystem zur Erwärmung eines Fluidstroms in einer Heißgasschweißanlage, mit einem Materialbett aus wärmeleitfähigem und/oder wärmespeicherndem Schüttgut, mit wenigstens einem innerhalb des Materialbetts angeordneten Kanal für die Durchleitung eines zu erwärmenden Fluidstroms und mit wenigstens einer in und/oder an dem Materialbett angeordneten Heizquelle zur Erzeugung von Wärme für die Beheizung des wenigstens einen Kanals.

Ein weiterer unabhängiger Aspekt der vorliegenden Erfindung betrifft ein Heizsystem zum Erwärmen eines Fluidstroms, insbesondere für eine Heißgasschweißanlage und/oder gemäß einem der vorstehenden Aspekte, mit einem Materialbett aus wärmeleitfähigem und/oder wärmespeicherndem Schüttgut, mit wenigstens einem innerhalb des Materialbetts angeordneten Kanal für die Durchleitung eines zu erwärmenden Fluidstroms und mit wenigstens einer in und/oder an dem Materialbett angeordneten Heizquelle zur Erzeugung von Wärme für die Beheizung des wenigstens einen Kanals, wobei das Materialbett durch ein Schüttgutgemisch gebildet ist.

In besonders vorteilhafter Weise kann es sich um ein Schüttgutgemisch aus einem wärmeleitfähigem Metallmaterial und wärmespeicherndem Sand und/oder Gesteinsmaterial haneln.

In weiter bevorzugter Weise kann das Materialbett quaderförmig ausgebildet und/oder von einer quaderförmigen Schale begrenzt sein. Es ergibt sich hierdurch eine kompakte Anordnung mit guter Handhabbarkeit und hoher Wärmespeicherkapazität.

Ein noch weiterer unabhängiger Aspekt der vorliegenden Erfindung betrifft einen Heizkörper, insbesondere für ein voranstehendes Heizsystem, mit wenigstens einem durch gasundurchlässige Wandabschnitte begrenzten Kanal zur Durchleitung eines zu erwärmenden Fluidstroms und mit einer Mehrzahl von in dem Kanal angeordneten Störkörpern zur Erzeugung und/oder Verstärkung einer turbulenten Strömung.

Ein solcher Heizkörper kann insbesondere einstückig beziehungsweise als integrales Bauteil ausgebildet sein und damit hohen Stabilitätsanforderungen genügen. Die Anordnung der Störkörper innerhalb des wenigstens einen Kanals kann die Wärmeübertragungseigenschaften verbessern, wie voranstehend bereits beschrieben. In bevorzugter Weise handelt es sich bei einem solchen Heizkörper um eine Metallplatte, wobei der wenigstens eine Kanal durch Fräsen oder allgemein durch spanendende Bearbeitung in die Platte eingearbeitet ist.

Ein noch weiterer unabhängiger Aspekt der vorliegenden Erfindung betrifft eine Heißgasschweißanlage, insbesondere zum Heißgasschweißen von Kunststoffwerkstücken, mit einem voranstehend beschriebenen Heizsystem und/oder einem voranstehend beschriebenen Heizkörper und mit einer Düsenvorrichtung für die Zuleitung eines erwärmten Fluidstroms auf ein zu schweißendes Werkstück.

Ein noch weiterer unabhängiger Aspekt der vorliegenden Erfindung betrifft ein Verfahren zum Erwärmen eines Fluidstroms, insbesondere zum Heißgasschweißen von Kunststoffwerkstücken und/oder zum Erwärmen eines Fluidstroms mit einem voranstehend beschriebenen Heizsystem, bei dem ein Fluidstrom durch einen in einem Materialbett aus wärmeleitfähigem und/oder wärmespeicherndem Schüttgut ausgebildeten Kanal geleitet wird und bei dem über eine in und/oder an dem Materialbett angeordnete Heizquelle Wärme erzeugt und über das Materialbett auf den Fluidstrom im Kanal übertragen wird.

Ein noch weiterer unabhängiger Aspekt der vorliegenden Erfindung betrifft ein Verfahren zum Erwärmen eines Fluidstroms, insbesondere zum Heißgasschweißen von Kunststoffwerkstücken und/oder zum Erwärmen eines Fluidstroms mit einem voranstehend beschriebenen Heizsystem, bei dem ein Fluidstrom durch einen in einem Heizkörper ausgebildeten Kanal geleitet wird und bei dem über eine in und/oder an dem Heizkörper angeordnete Heizquelle Wärme erzeugt und über den Heizkörper auf den Fluidstrom im Kanal übertragen wird.

In bevorzugter Weise wird durch wenigstens einen Störkörper im Kanal eine turbulente Strömung erzeugt und/oder verstärkt. Die Wärmeübertragung im Kanal wird auf diese Weise verbessert und es kann mit nur geringem Bauraum eine geeignete Erwärmung des Fluidstroms sichergestellt werden.

Weiter bevorzugt kann der Fluidstrom diskontinuierlich und/oder in periodisch wiederkehrenden Zyklen durch den Kanal geleitet werden. Für das Heißgasschweißen eines Werkstücks kann demnach temporär ein Fluidstrom durch den Kanal geleitet werden. Dabei kann das Beheizen des Kanals durch eine Heizquelle jedoch unabhängig von der Durchleitung des Fluidstroms vorgenommen werden.

Noch weiter bevorzugt kann die Heizquelle in periodisch wiederkehrenden Zyklen an- und/oder abgeschaltet werden. Ein dauerhaftes Beheizen kann hierdurch vermieden und dadurch der Gesamtenergieaufwand gering gehalten werden.

Schließlich kann in bevorzugter Weise der Fluidstrom in einem Zyklus durch den Kanal geleitet werden, der zeitlich kürzer bemessen ist, als ein Zyklus, in dem die Heizquelle sich in einem angeschalteten und/oder abgeschalteten Zustand befindet. Die Heizzyklen sind damit verhältnismäßig lang bemessen, sodass die Anzahl von An- und Abschaltvorgängen gering gehalten werden kann. Die Lebensdauer der Heizquelle lässt sich hierdurch verbessern.

Die voranstehenden in Bezug auf das erfindungsgemäße Heizsystem beschriebenen Merkmale, Einzelheiten und Vorteile gelten in gleicher Weise auch für den erfindungsgemäßen Heizkörper, die erfindungsgemäße Heißgasschweißanlage sowie das erfindungsgemäße Verfahren.

Ebenso gelten die beschriebenen Merkmale, Einzelheiten und Vorteile des Verfahrens auch für ein erfindungsgemäßes Heizsystem sowie eine erfindungsgemäße Heißgasschweißanlage, beziehungsweise kann eine entsprechende Konfiguration des erfindungsgemäßen Heizsystems sowie der erfindungsgemäßen Heißgasschweißanlage vorgesehen sein.

Nachfolgend wird die Erfindung beispielhaft unter Bezugnahme auf die beigefügten Figuren beschrieben.

Es zeigen, jeweils schematisch:
- Fig. 1: eine perspektivische Darstellung eines erfindungsgemäßen Heizsystems gemäß einer Ausführungsform,
- Fig. 2: eine Seitenansicht des erfindungsgemäßen Heizsystems von Fig. 1,
- Fig. 3: eine Schnittdarstellung eines erfindungsgemäßen Heizsystems von Fig. 1 und 2 entlang der Schnittlinie C-C,
- Fig. 4: eine Seitenansicht eines Wellrohrschlauchs für ein erfindungsgemäßes Heizsystem,
- Fig. 5: eine Schnittdarstellung des Wellrohrschlauchs von Fig. 4 entlang der Schnittlinie A-A,
- Fig. 6: eine perspektivische Schnittdarstellung eines erfindungsgemäßen Heizkörpers gemäß einer Ausführungsform,
- Fig. 7: eine Schnittdarstellung des Heizkörpers gemäß Fig. 6,
- Fig. 8: eine Schnittdarstellung des Heizkörpers von Fig. 6 und 7 ohne Störkörper,
- Fig. 9: eine Schnittdarstellung eines erfindungsgemäßen Heizkörpers gemäß einer weiteren Ausführungsform,
- Fig. 10: eine Schnittdarstellung eines erfindungsgemäßen Heizkörpers gemäß einer noch weiteren Ausführungsform,
- Fig. 11: eine Schnittdarstellung eines erfindungsgemäßen Heizkörpers gemäß einer noch weiteren Ausführungsform.

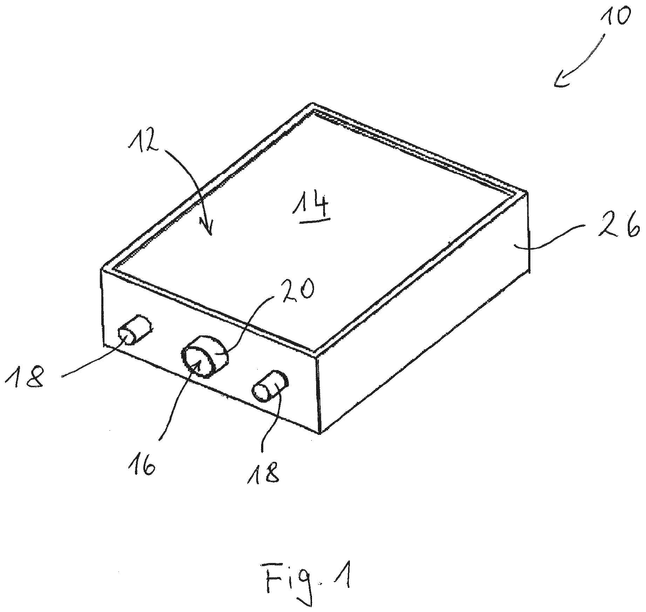

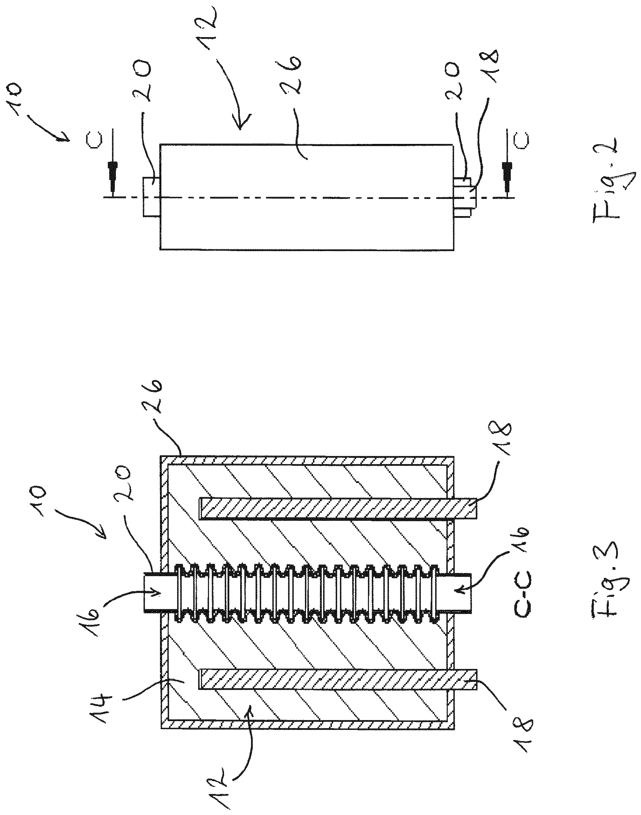

Fig. 1 zeigt eine perspektivische Darstellung eines erfindungsgemäßen Heizsystems 10 gemäß einer Ausführungsform der Erfindung und die Fig. 2 und 3 zeigen weiteren Ansichten des Heizsystems 10 von Fig. 1, nämlich in einer Seitenansicht (Fig. 2) sowie einer Längsschnittdarstellung (Fig. 3) entlang der Schnittlinie C-C.

Das Heizsystem 10 ist zum Erwärmen eines hier nicht näher gezeigten Fluidstroms ausgebildet. Insbesondere eignet sich das Heizsystem 10 zum Erwärmen eines Fluidstroms in einer hier ebenfalls nicht näher dargestellten Heißgasschweißanlage.

Das Heizsystem 10 ist ausgestattet mit einem Materialbett 12 aus wärmeleitfähigem und/oder wärmespeicherndem Schüttgut 14, mit wenigstens einem innerhalb des Materialbetts 12 angeordneten Kanal 16 für die Durchleitung eines zu erwärmenden Fluidstroms und mit wenigstens einer in und/oder an dem Materialbett 12 angeordneten Heizquelle 18 zur Erzeugung von Wärme für die Beheizung des wenigstens einen Kanals 16.

Wie in Fig. 1 und 3 dargestellt, können beispielsweise zwei Heizquellen 18 vorgesehen sein, insbesondere um eine von zwei Seiten des Kanals 16 gleichmäßige Erwärmung zu ermöglichen. Ebenso kann auch nur eine Heizquelle 18 vorgesehen sein oder mehr als zwei Heizquellen 18. Bei den gezeigten Heizquellen 18 kann es sich beispielsweise um elektrische Heizpatronen oder Heizspulen beziehungsweise Heizspiralen handeln.

Die beiden Heizquellen 18 können zumindest abschnittsweise oder vollständig in das Materialbett 12 eingelassen sein. Insbesondere können die beiden Heizquellen 18 zumindest abschnittsweise oder vollständig durch das Schüttgut 14 bedeckt und/oder umgeben sein. Die beiden Heizquellen 18 können in Umfangsrichtung durch das Schüttgut 14 bedeckt und/oder umgeben sein, wohingegen ein Längsabschnitt aus dem Schüttgut hervorstehen kann. Bei dem hervorstehenden Abschnitt kann es sich um einen heizinaktiven Abschnitt handeln.

Der wenigstens eine Kanal 16 kann, wie in den Fig. 1 und 3 gezeigt, in einem in dem Materialbett 12 eingebetteten Wellrohrschlauch 20 ausgebildet sein. Sofern mehrere Kanäle 16 vorgesehen sind, können diese in mehreren Wellrohrschläuchen 20 ausgebildet sein, die in dem Materialbett 12 eingelassen sind.

Das Materialbett 12 kann durch Schüttgut 14 aus wärmeleitfähigem und/oder wärmespeicherndem und/oder verdichtetem Sand, Metallpulver und/oder Granulat gebildet sein. Insbesondere kann das Schüttgut 14 als Schüttgutgemisch gebildet sein, bevorzugt als ein verdichtetes Schüttgutgemisch und/oder ein Schüttgutgemisch aus einem wärmeleitfähigem Metallmaterial und wärmespeicherndem Sand und/oder Gesteinsmaterial.

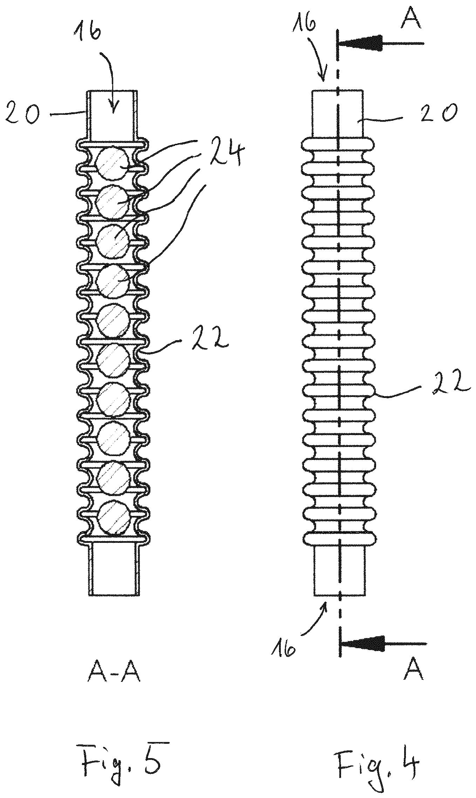

Die Figuren 4 und 5 zeigen Detailansichten eines Wellrohrschlauchs 20 des in Fig. 1 bis 3 gezeigten Heizsystems 10. Dabei zeigt Fig. 4 eine Seitenansicht des Wellrohrschlauchs 20 und Fig. 5 eine Längsschnittdarstellung des Wellrohrschlauchs 20 entlang der Schnittlinie A-A.

Den Figuren 4 und 5 kann entnommen werden, dass durch die Struktur des Wellrohrschlauchs 20 bereits eine große Außenfläche 22 gebildet wird, über die eine effiziente Wärmeübertragung von dem Schüttgut 14 auf einen Fluidstrom im Kanal 16 des Wellrohrschlauchs 20 erfolgen kann.

Erfindungsgemäß ist ferner vorgesehen, dass innerhalb des Kanals innerhalb des Wellrohrschlauchs 20 zumindest ein Störkörper 24 zur Erzeugung und/oder Verstärkung einer turbulenten Strömung vorgesehen ist. Insbesondere können innerhalb des Kanals 16 im Wellrohrschlauch 20 mehrere Störkörper 24 vorgesehen sein. Der Kanal 16 kann vollständig mit Störkörpern befüllt sein.

Bei den Störkörpern 24 kann es sich beispielsweise um Kugeln oder auch um anders geformte Körper handeln, beispielsweise um quadratische oder unregelmäßig geformte Elemente.

Wie in den Fig. 1 und 3 gezeigt, kann das Materialbett 12 durch eine quaderförmige Schale 26 begrenzt sein beziehungsweise kann durch die Schale 26 das Materialbett 12 quaderförmig begrenzt sein, wodurch sich ein kompakter Aufbau und ein hohes Maß an Wärmespeicherfähigkeit ergibt. Ebenso kann das Materialbett eine andere Gesamtform annehmen und die Schale 26 entsprechend ausgebildet sein, beispielsweise eine Zylinderform.

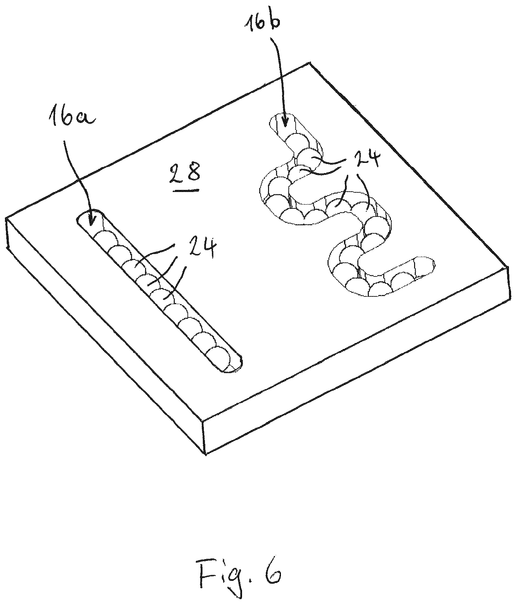

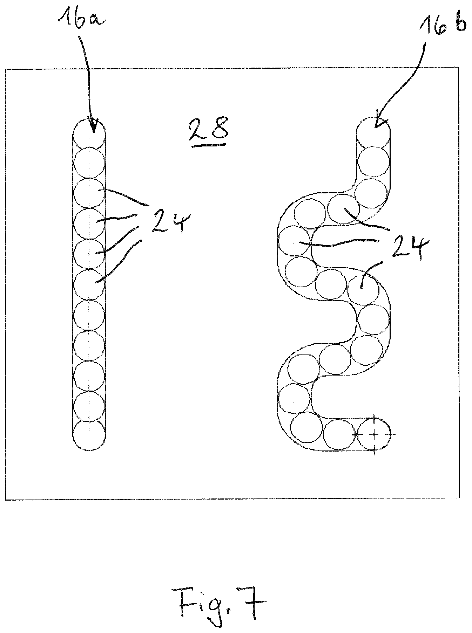

Die Fig. 6 und 7 zeigen eine perspektivische Schnittdarstellung eines erfindungsgemäßen Heizkörpers 28 gemäß einer Ausführungsform der Erfindung und Fig. 7 zeigt eine weitere Schnittdarstellung des Heizkörpers 28 gemäß Fig. 6. Der Heizkörper 28 kann als Heizplatte ausgebildet sein, insbesondere als Heizplatte aus einem wärmeleitfähigen und/oder wärmespeichernden Metallwerkstoff.

Ein erfindungsgemäßes Heizsystem 10 kann anstelle des in den Fig. 1 und 3 gezeigten Materialbetts 12 mit Wellrohrschlauch 20 einen in den Fig. 6 und 7 gezeigten Heizkörper 28 aufweisen.

Demgemäß kann ein erfindungsgemäßes Heizsystem 10 ausgestattet sein mit einem Heizkörper 28 aus wärmeleitfähigem und/oder wärmespeicherndem Material, mit wenigstens einem innerhalb des Heizkörpers 28 vorgesehenen Kanal 16, 16a, 16b für die Durchleitung eines zu erwärmenden Fluidstroms und mit wenigstens einer hier nicht näher gezeigten Heizquelle zur Erzeugung von Wärme für die Beheizung des wenigstens einen Kanals 16, 16a, 16b durch Erwärmung des Heizkörpers 28.

Gemäß Fig. 6 und 7 sind beispielhaft mehrere Kanäle 16a und 16b gezeigt, wobei Kanal 16a linear verläuft und Kanal 16b mäanderförmig beziehungsweise schlangenförmig.

Wie ferner in den Fig. 6 und 7 dargestellt, ist auch in dieser Ausführungsform in dem wenigstens einen Kanal 16 wenigstens ein Störkörper 24 zur Erzeugung und/oder Verstärkung einer turbulenten Strömung vorgesehen.

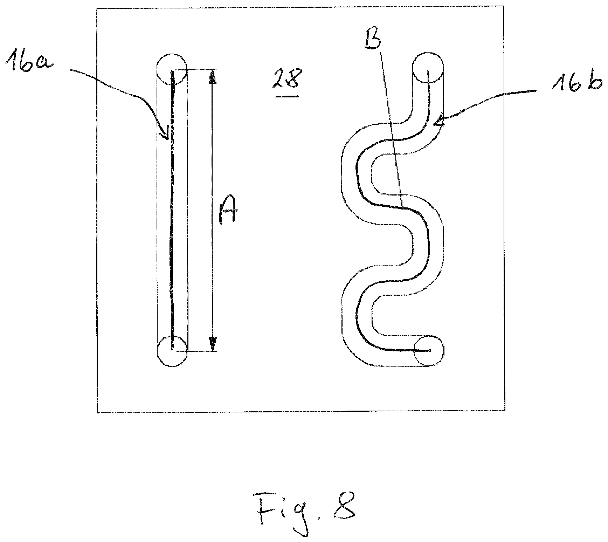

Die Fig. 8 zeigt den Heizkörper 28 aus Fig. 6 und 7 ohne Störkörper 24. Aus der Fig. 8 lässt sich qualitativ das Verhältnis der Pfadlänge A des linearen Kanals 16a zur Pfadlänge B des mäanderförmigen Kanals 16b entnehmen. Rein beispielhaft kann der lineare Kanal 16a eine Pfadlänge A von 140 mm aufweisen und die Pfadlänge B des mäanderförmigen Kanals 16b kann etwa 240 mm betragen.

Es versteht sich, dass ein Fluidstrom im mäanderförmigen Kanal 16b aufgrund der größeren Pfadlänge stärker erwärmt werden kann als ein Fluidstrom im kürzeren Kanal 16a. Allerdings nimmt der mäanderförmige Kanal auch mehr Bauraum innerhalb des Heizkörpers 28 ein, sodass die maximale Anzahl an Kanälen in dem Heizkörper 28 stärker begrenzt wird.

In einem erfindungsgemäßen Heizsystem 10 können Kanäle 16 mit unterschiedlichen Abmessungen und/oder Verläufen vorgesehen sein, wie in Fig. 6 bis 8 gezeigt. Dabei können die unterschiedlich ausgestalteten Kanäle 16a und 16b im Hinblick auf unterschiedliche Temperatur- und/oder Erwärmungsanforderungen unterschiedlicher Fluidströme ausgestaltet sein. Dies kann für die Anströmung unterschiedlicher Werkstückabschnitte von Vorteil sein.

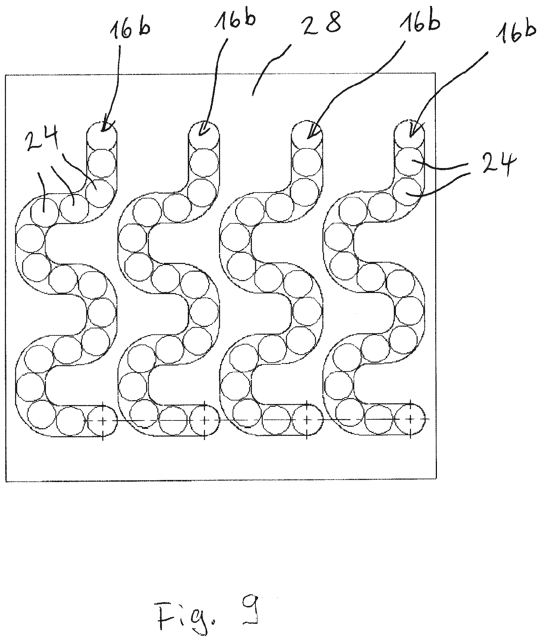

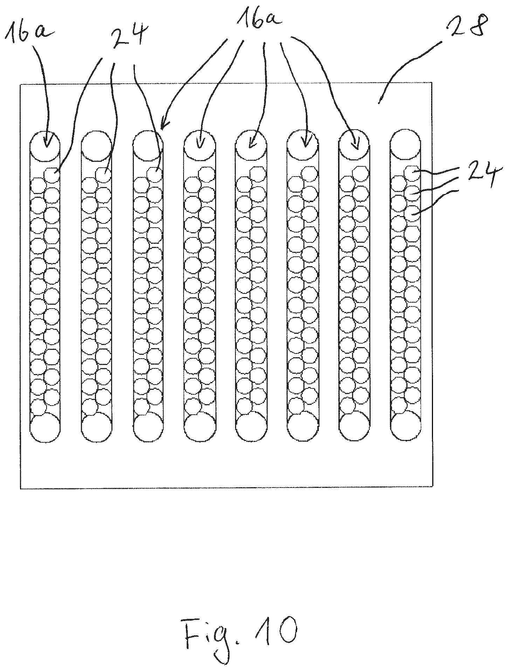

Ebenso ist es möglich, in einem Heizsystem 10 und/oder in einem Materialbett 12 und/oder in einem Heizkörper 28 mehrere Kanäle 16 mit identischen Abmessungen und/oder Verläufen vorzusehen, wie in den Fig. 9 und 10 in Bezug auf einen Heizkörper 28 beispielhaft dargestellt.

So zeigt Fig. 9 einen Heizkörper 28 mit insgesamt vier mäanderförmig verlaufenden Kanälen 16b. Sämtliche Kanäle 16b sind identisch ausgebildet. Aus der Fig. 9 ist ersichtlich, dass aufgrund des mäanderförmigen Verlaufs nur insgesamt vier Kanäle 16b in dem Heizkörper 28 vorgesehen werden können. Fig. 10 zeigt einen Heizkörper 28 mit insgesamt acht linear verlaufenden Kanälen 16a. Es versteht sich, dass der lineare Verlauf der Kanäle 16a gemäß Fig. 10 eine höhere Gesamtzahl an Kanälen 16 in dem Heizkörper 28 ermöglicht.

Durch das Vorsehen von erfindungsgemäßen Störkörpern 24 in einem Kanal 16 kann jedoch eine kürzere Pfadlänge in geeigneter Weise kompensiert werden. So kann beispielsweise der lineare Kanal 16a in Fig. 6 und 7 mit Störkörpern 24 eine Wärmeübertragung ermöglichen, die einer Wärmeübertragung in einem mäanderförmigen Kanal 16b ohne Störkörper entspricht. Freilich lässt sich durch einen mäanderförmigen Kanal 16b mit Störkörper 24 die Wärmeübertragung nochmals verbessern.

In den Ausführungsbeispielen gemäß den Fig. 6, 7, 9 und 10 können die kugelförmigen Störkörper 24 identische Abmessungen aufweisen beziehungsweise identisch ausgebildet sein.

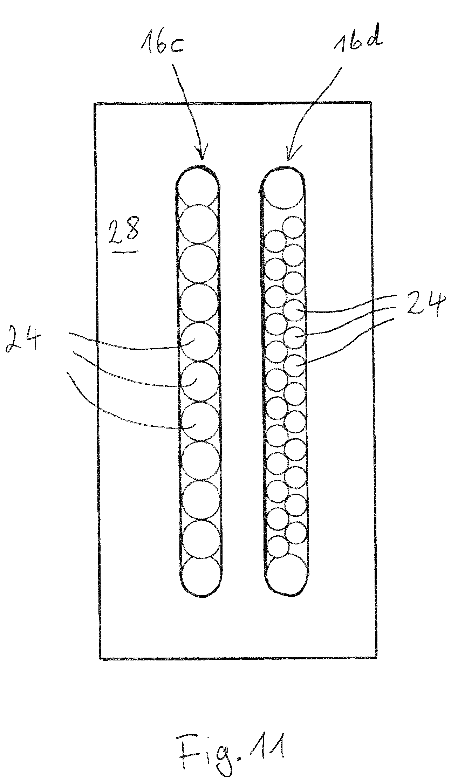

Ebenso ist es möglich, dass innerhalb eines Heizsystems 10 beziehungsweise innerhalb eines Heizkörpers 28 Störkörper 24 unterschiedlicher Abmessungen vorgesehen sind, wie in der Ausführungsform gemäß Fig. 11 dargestellt. Der in den Fig. 11 gezeigte Heizkörper weist zwei lineare Kanäle 16c und 16d auf, wobei in dem links dargestellten Kanal 16c Störkörper 24 mit einem größeren Durchmesser vorgesehen sind, als in dem rechts dargestellten Kanal 16d.

Weiterhin können auch innerhalb eines einzigen Kanals 16 Störkörper 24 mit unterschiedlichen Durchmessern oder Abmessungen vorgesehen sein, was hier nicht näher dargestellt ist. Beispielsweise können unterschiedliche Streckenabschnitte eines Kanals 16 mit unterschiedlich bemessenen Störkörpern befüllt sein, um die Wärmeübertragungseigenschaften entlang des Verlaufs eines Kanals 16 zu variieren. Mit anderen Worten kann wenigstens ein Kanal 16 eine Mehrzahl von Streckenabschnitten aufweisen und die Größe oder die Abmessungen der Störkörper 24 kann in Abhängigkeit des jeweiligen Streckenabschnitts ausgewählt sein beziehungsweise können die Größen oder Abmessungen der Störkörper 24 in einem Streckenabschnitt des Kanals 16 von den Größen oder Abmessungen der Störkörper 24 in einem anderen Streckenabschnitt des Kanals 16 abweichen.

Im Betrieb eines erfindungsgemäßen Heizsystems 10 beziehungsweise einer erfindungsgemäßen Heißgasschweißanlage ein Fluidstrom dadurch erwärmt werden, dass dieser durch einen in einem Materialbett 12 aus wärmeleitfähigem und/oder wärmespeicherndem Schüttgut 14 ausgebildeten Kanal 16 geleitet wird und über eine in und/oder an dem Materialbett 12 angeordnete Heizquelle 18 Wärme erzeugt und über das Materialbett 12 auf den Fluidstrom im Kanal 16 übertragen wird.

Ebenso kann im Betrieb eines erfindungsgemäßen Heizsystems 10 beziehungsweise einer erfindungsgemäßen Heißgasschweißanlage ein Fluidstrom dadurch erwärmt werden, dass dieser durch einen in einem Heizkörper 28 aus wärmeleitfähigem und/oder wärmespeicherndem Material ausgebildeten Kanal 16 geleitet wird und über eine in und/oder an dem Heizkörper 28 angeordnete Heizquelle Wärme erzeugt und über den Heizkörper 28 auf den Fluidstrom im Kanal 16 übertragen wird.

Ein solches Verfahren eignet sich insbesondere für die Erwärmung eines Gas- und/oder Luftstroms für das Heißgasschweißen von Kunststoffwerkstücken.

## Patentansprüche

1. Heizsystem (10) zum Erwärmen eines Fluidstroms, insbesondere für eine Heißgasschweißanlage, mit einem Materialbett (12) aus wärmeleitfähigem und/oder wärmespeicherndem Schüttgut (14), mit wenigstens einem innerhalb des Materialbetts (12) angeordneten Kanal (16) für die Durchleitung eines zu erwärmenden Fluidstroms und mit wenigstens einer in und/oder an dem Materialbett (12) angeordneten Heizquelle (18) zur Erzeugung von Wärme für die Beheizung des wenigstens einen Kanals (16), wobei in dem Kanal (16) wenigstens ein Störkörper (24) zur Erzeugung und/oder Verstärkung einer turbulenten Strömung vorgesehen ist.

2. Heizsystem (10) nach Anspruch 1, **dadurch gekennzeichnet, dass** der wenigstens eine Kanal (16) in einem in dem Materialbett (12) eingebetteten Rohr und/oder Schlauch (20) ausgebildet ist und/oder dass mehrere Kanäle (16) in mehreren Rohren und/oder Schläuchen (20) ausgebildet sind und/oder dass der wenigstens eine Kanal 16() in einem in dem Materialbett (12) eingebetteten Wellrohrschlauch (20) ausgebildet ist und/oder dass mehrere Wellrohrschläuche (20) in dem Materialbett (12) eingelassen sind.

3. Heizsystem (10) nach einem der vorstehenden Ansprüche, **dadurch gekennzeichnet, dass** das Materialbett (12) durch Schüttgut (14) aus wärmeleitfähigem und/oder wärmespeicherndem und/oder verdichtetem Sand, Metallpulver und/oder Granulat gebildet ist und/oder das Materialbett (12) durch ein Schüttgutgemisch (14) gebildet ist, insbesondere durch ein verdichtetes Schüttgutgemisch (14) und/oder ein Schüttgutgemisch (14) aus einem wärmeleitfähigem Metallmaterial und wärmespeicherndem Sand und/oder Gesteinsmaterial.

4. Heizsystem (10) nach einem der vorstehenden Ansprüche, **dadurch gekennzeichnet, dass** die Heizquelle (18) als elektrische Heizpatrone und/oder Heizspirale ausgebildet und/oder zumindest abschnittsweise oder vollständig in das Materialbett (12) eingelassen ist und/oder dass das Materialbett (12) eine Mehrzahl von Kanälen (16) aufweist und/oder zur Wärmeübertragung zwischen zwei Fluidströmen ausgebildet ist.

5. Heizsystem (10) zum Erwärmen eines Fluidstroms, insbesondere nach einem der vorstehenden Ansprüche und/oder für eine Heißgasschweißanlage, mit einem Heizkörper (28) aus wärmeleitfähigem und/oder wärmespeicherndem Material, mit wenigstens einem innerhalb des Heizkörpers (28) vorgesehenen Kanal (16) für die Durchleitung eines zu erwärmenden Fluidstroms und mit wenigstens einer Heizquelle zur Erzeugung von Wärme für die Beheizung des wenigstens einen Kanals (16) durch Erwärmung des Heizkörpers (28), wobei in dem Kanal (16) wenigstens ein Störkörper (24) zur Erzeugung und/oder Verstärkung einer turbulenten Strömung vorgesehen ist.

6. Heizsystem (10) nach Anspruch 5, **dadurch gekennzeichnet, dass** der Heizkörper (28) als Heizplatte ausgebildet ist, bevorzugt als Heizplatte aus einem Metallwerkstoff, und/oder dass der Heizkörper (28) und/oder die Heizplatte als Wärmeübertrager und/oder zur Temperaturänderung und/oder Temperaturregelung ausgebildet ist, insbesondere zur Wärmeübertragung auf eine Gasströmung und/oder zur Temperaturänderung und/oder Temperaturregelung einer Gasströmung.

7. Heizsystem (10) nach einem der vorstehenden Ansprüche, **dadurch gekennzeichnet, dass** in dem wenigstens einen Kanal (16) eine Mehrzahl von Störkörpern (24) angeordnet ist und/oder dass der wenigstens eine Kanal mit Störkörpern (24) aufgefüllt oder zumindest abschnittsweise befüllt ist und/oder dass eine Mehrzahl von Störkörpern (24) in dem wenigstens einen Kanal (16) unbeweglich und/oder zumindest temporär fixiert ist.

8. Heizsystem (10) nach einem der vorstehenden Ansprüche, **dadurch gekennzeichnet, dass** der wenigstens eine Störkörper (24) mindestens 10% der Querschnittsfläche des Kanals (16) einnimmt, bevorzugt mehr als 20%, weiter bevorzugt mehr als 30%, noch weiter bevorzugt mehr als 40%, noch weiter bevorzugt mehr als 50%, noch weiter bevorzugt mehr als 60%, noch weiter bevorzugt mehr als 70%, noch weiter bevorzugt mehr als 80%.

9. Heizsystem (10) nach einem der vorstehenden Ansprüche, **dadurch gekennzeichnet, dass** in dem wenigstens einen Kanal (16) eine Mehrzahl von Störkörpern (24) identischer Größe oder mit identischen Abmessungen angeordnet ist und/oder dass in dem wenigstens einen Kanal (16) Störkörper (24) mit unterschiedlichen Größen oder mit unterschiedlichen Abmessungen angeordnet sind.

10. Heizsystem (10) nach einem der vorstehenden Ansprüche, **dadurch gekennzeichnet, dass** der wenigstens eine Kanal (16) eine Mehrzahl von Streckenabschnitten aufweist und die Größe oder die Abmessungen der Störkörper (24) in Abhängigkeit des jeweiligen Streckenabschnitts ausgewählt ist/sind und/oder dass die Größen oder Abmessungen der Störkörper (24) in einem Streckenabschnitt des Kanals (16) von den Größen oder Abmessungen der Störkörper (24) in einem anderen Streckenabschnitt des Kanals (16) abweichen.

11. Heizsystem (10) nach einem der vorstehenden Ansprüche, **dadurch gekennzeichnet, dass** in dem Materialbett (12) oder dem Heizkörper (28) eine Mehrzahl von Kanälen (16) vorgesehen ist, die eine identische Länge und/oder eine identische Querschnittsgröße und/oder einen identischen Verlauf aufweisen und/oder dass der wenigstens eine Kanal (16) und/oder die mehreren Kanäle (16) durch gasundurchlässige Kanalwände begrenzt ist/sind und/oder dass in dem Materialbett (12) oder in dem Heizkörper (28) mehrere Kanäle (16) vorgesehen sind, die verschiedene Längen und/oder verschiedene Querschnittsgrößen und/oder verschiedene Verlaufsformen aufweisen.

12. Heizsystem (10) zum Erwärmen eines Fluidstroms, insbesondere nach einem der vorstehenden Ansprüche und/oder für eine Heißgasschweißanlage, mit einem Materialbett (12) aus wärmeleitfähigem und/oder wärmespeicherndem Schüttgut (14), mit wenigstens einem innerhalb des Materialbetts (12) angeordneten Kanal (16) für die Durchleitung eines zu erwärmenden Fluidstroms und mit wenigstens einer in und/oder an dem Materialbett (12) angeordneten Heizquelle (18) zur Erzeugung von Wärme für die Beheizung des wenigstens einen Kanals (16), wobei das Materialbett (12) durch ein Schüttgutgemisch (14) gebildet ist, bevorzugt durch ein Schüttgutgemisch (14) aus einem wärmeleitfähigem Metallmaterial und wärmespeicherndem Sand und/oder Gesteinsmaterial.

13. Heizkörper (28), insbesondere für ein Heizsystem (10) nach einem der Ansprüche 5 bis 11, mit wenigstens einem durch gasundurchlässige Wandabschnitte begrenzten Kanal (16) zur Durchleitung eines zu erwärmenden Fluidstroms und mit einer Mehrzahl von in dem Kanal (16) angeordneten Störkörpern (24) zur Erzeugung und/oder Verstärkung einer turbulenten Strömung.

14. Heißgasschweißanlage, insbesondere zum Heißgasschweißen von Kunststoffwerkstücken, mit einem Heizsystem (10) nach einem der vorstehenden Ansprüche 1 bis 12 und/oder einem Heizkörper (28) nach Anspruch 13 und mit einer Düsenvorrichtung für die Zuleitung eines erwärmten Fluidstroms auf ein zu schweißendes Werkstück.

15. Verfahren zum Erwärmen eines Fluidstroms, insbesondere zum Heißgasschweißen von Kunststoffwerkstücken und/oder mit einem Heizsystem (10) nach einem der vorstehenden Ansprüche 1 bis 12, bei dem ein Fluidstrom durch einen in einem Materialbett (12) aus wärmeleitfähigem und/oder wärmespeicherndem Schüttgut (14) ausgebildeten Kanal (16) geleitet wird und bei dem über eine in und/oder an dem Materialbett (12) angeordnete Heizquelle (18) Wärme erzeugt und über das Materialbett (12) auf den Fluidstrom im Kanal (16) übertragen wird.
